(19) Europäisches Patentamt
European Patent Office
Office européen des brevets

(11) **EP 4 454 040 B1**

(12) **EUROPEAN PATENT SPECIFICATION**

(45) Date of publication and mention
of the grant of the patent:
**04.02.2026 Bulletin 2026/06**

(21) Application number: **22834752.2**

(22) Date of filing: **21.12.2022**

(51) International Patent Classification (IPC):
$H01M\ 8/0662$ (2016.01)   $H01M\ 8/18$ (2006.01)
$H01M\ 8/04186$ (2016.01)   $H01M\ 8/04089$ (2016.01)
$H01M\ 8/04082$ (2016.01)

(52) Cooperative Patent Classification (CPC):
**H01M 8/188; H01M 8/04097; H01M 8/04186;
H01M 8/04201; H01M 8/0662;** Y02E 60/50

(86) International application number:
**PCT/NL2022/050745**

(87) International publication number:
**WO 2023/121454 (29.06.2023 Gazette 2023/26)**

(54) **A HYDROGEN-X FLOW BATTERY SYSTEM COUPLED TO A HYDROGEN PIPELINE NETWORK**

WASSERSTOFF-X-FLUSSBATTERIESYSTEM, GEKOPPELT AN EIN
WASSERSTOFF-X-ROHRLEITUNGSNETZ

SYSTÈME DE BATTERIE À CIRCULATION D'HYDROGÈNE- X COUPLÉ À UN RÉSEAU DE
CONDUITES D'HYDROGÈNE-X

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.12.2021 NL 2030263**

(43) Date of publication of application:
**30.10.2024 Bulletin 2024/44**

(73) Proprietor: **Elestor B.V.**
**6827 AV Arnhem (NL)**

(72) Inventors:
• **YASADI, Kamuran**
  **6827 AV ARNHEM (NL)**
• **VAN DIJK, Willem-Jan**
  **6827 AV ARNHEM (NL)**
• **KOUT, Wiebe Berend**
  **6827 AV ARNHEM (NL)**

(74) Representative: **Algemeen Octrooi- en
Merkenbureau B.V.**
**P.O. Box 645**
**5600 AP Eindhoven (NL)**

(56) References cited:
**US-A1- 2013 309 592     US-A1- 2015 188 178
US-B2- 10 326 153**

## Description

The present invention generally relates to a flow battery assembly used to electrochemically generate and store electric power, especially to a flow battery assembly in which both charging and discharging reactions happen in the presence of hydrogen and of an electrolyte comprising a halogen ion or a mixture of halogen ions, more in detail a hydrogen-X flow battery system coupled to a hydrogen pipeline network.

Such flow battery systems are well known in the art. For example, European patent application EP 3 087 634 in the name of the present application relates to a hydrogen-redox flow battery assembly comprising: one or more battery cells, each battery cell comprising: a hydrogen chamber configured to house a flow path of hydrogen gas between a hydrogen inlet and a hydrogen outlet; an electrolyte chamber configured to house a flow path of liquid electrolyte between an electrolyte inlet and an electrolyte outlet; a membrane electrode assembly, the membrane electrode assembly configured to only allow a diffusion of protons through the membrane electrode assembly between the hydrogen gas in the hydrogen chamber and the liquid electrolyte in the electrolyte chamber; a hydrogen reservoir connected to the hydrogen chamber of the one or more battery cells and configured to retain the hydrogen gas; and an electrolyte reservoir connected to the electrolyte chamber of one or more battery cells and configured to retain the liquid electrolyte.

US 2016/0322653 relates to the field of rechargeable batteries, i.e. flow batteries and flow battery systems that reduce reactant crossover, which generally results in a loss of energy efficiency and battery capacity. In many battery systems, reactants exist in a solid form, and only the shuttle ion is mobile. However, in flow batteries, at least one of the reactant materials exists in a liquid or a gas phase. Many of these liquid or gas reactant materials tend to cross through the cell membrane. When these crossover events occur, they can negatively affect the performance of a flow battery. On basis of this aspect, US 2016/0322653 discloses a crossover return system including a vessel operably connected to the $H_2$ feed and return system and configured to receive an effluent containing a first portion of the hydrogen reactant and a second portion of the bromine electrolyte, the vessel configured to separate the first portion from the second portion, (ii) a first return line operably connecting the vessel to the first tank to return first portion of the hydrogen reactant to the first tank, and (iii) a second return line operably connecting the vessel to the second tank to return the bromine electrolyte to the second tank.

International application WO 2013/086100 relates to a flow battery comprising hydrogen bromide, i.e. to a method of charging a flow battery having at least one cell, the method comprising passing current through the cell to produce a specific partial pressure of hydrogen in the hydrogen chamber, and controlling the total pressure in the electrolyte chamber so as to be substantially similar or at a defined pressure differential relative to the total pressure of the hydrogen chamber.

US 2012/299384 relates to energy storage and generation systems, e.g. a combination of flow battery and hydrogen fuel cell, that exhibits operational stability in harsh environments, e.g., both charging and discharging reactions in a regenerative fuel cell in the presence of a halogen ion or a mixture of halogen ions.

US 2015/188178 relates to a flow battery system, comprising a flow battery including a first electrode and a second electrode disposed within a housing, the flow battery configured to generate electrical energy by passing a first active material over the first electrode and a second active material over the second electrode, a first reservoir fluidically connected to the housing and configured to store the first active material, the first reservoir positioned remote from the flow battery; and a safety system operatively connected to the first reservoir; the safety system configured to detect an unsafe condition in the first reservoir and to mitigate the unsafe condition. The flow battery is configured as a redox flow battery and the first active material includes one of hydrogen, bromine, or a solution of bromine and hydrogen bromide and the safety system includes a pressure relief valve operatively connected to the first reservoir, the pressure relieve valve configured to vent at least a portion of the first active material when a pressure within the first reservoir exceeds a predetermined pressure value.

US 2013/309592 relates to an electrochemical device comprising a cell including a separator between a plurality of chambers, a fluidic coupling for a first energy component, a fluidic coupling for a second energy component, the first and second energy components adapted for ionic transfer, an electrode on each side of the separator, the electrode suitable for electron transfer with the energy component in the corresponding chamber and a separator including molten salts or ionic liquids adapted for negative ion transfer, further comprising a homogeneous catalyst, comprising ionic species dissolved within the molten salt in the separator, wherein molten salt separator is comprised of a plurality of salts defining a combination of salts in a ratio based on a melting point, the combination of salts having a melting point lower than any of the plurality of salts individually.

In existing hydrogen-X flow battery systems the hydrogen is compressed, either electrochemically or mechanically, and stored in hydrogen tanks. These tanks add cost and increase the size of the flow battery system. An advantage of hydrogen-X flow batteries compared to other storage technologies is the low cost of hydrogen and e.g. bromine, and a disadvantage is the poor volumetric energy density of hydrogen at atmospheric pressure.

Another disadvantage is that the tank for the liquid electrolyte must be kept at the required hydrogen pressure for easy electrochemical compression inside the flow battery cells, which increases the cost for the electrolyte tank. In that context the afore mentioned US 2012/299384 describes a hydrogen-bromine flow battery system with a pressure equalization line between the hydrogen and liquid electrolyte tanks. In addition, WO 2013/086100 describes a hydrogen-bromine flow battery system with pressure balanced cells in which either the entire electrolyte reservoir is kept at increased pressure, or a part of the electrolyte is pressurized prior to the electrolyte entering the flow battery cells, so that the liquid pressure is balanced with the hydrogen pressure. The hydraulic energy is regulated by a pressure regulator between the high and low pressure reservoirs. Although this method does reduce the cost for the electrolyte tank, it is also less efficient as the pumping losses increase.

Because of the high investment costs for hydrogen tanks and pressurized electrolyte tanks, and because of the relatively high electrolyte pumping losses in pressure balanced cells, hydrogen-X flow battery systems aren't cost competitive today. Atmospheric electrolyte tanks are much lower cost, but require an escape for the hydrogen which diffuses into the electrolyte, to prevent pressure build up in the electrolyte tank. The hydrogen can't be simply vented because it also contains halogen vapors such as bromine. So, in case the hydrogen is vented to the atmosphere it needs to be free of impurities. This is especially important if the impurities consist of bromine gas or other halogen gasses. Known methods are activated carbon filters, or catalytic recombiners disclosed in the afore mentioned US 10,299,384. Activated carbon filters need to be regularly replaced, which adds cost. Also, the bromine trapped in the filter and the hydrogen vented to the atmosphere are no longer available for their intended use of storing electricity. Thus, the storage capacity of the battery slowly decreases.

An object of the present invention is to provide a method for the coupling of a hydrogen-X flow battery system to a hydrogen pipeline network in a cost and energy efficient way.

Another object of the present invention is to increase the energy efficiency of hydrogen-X flow battery systems.

Another object of the present invention is to reduce the investment costs and dimensions of hydrogen-X flow battery systems.

The present invention thus relates to a flow battery system, comprising:

> a first tank including a hydrogen reactant;
> a second tank including a bromine electrolyte;
> at least one cell including a hydrogen reactant side operably connected to the first tank through an $H_2$ feed and return system and a bromine electrolyte side operably connected to the second tank through a bromine electrolyte feed and return system; and
> a crossover return system including (i) a vessel operably connected to the H2 feed and return system and configured to receive an effluent containing a first portion of the hydrogen reactant and a second portion of the bromine electrolyte, the vessel configured to separate the first portion from the second portion, (ii) a first return line operably connecting the vessel to the first tank to return first portion of the hydrogen reactant to the first tank, and (iii) a second return line operably connecting the vessel to the second tank to return the second portion of the bromine electrolyte to the second tank, the flow battery system further comprising:

> a scrubber positioned between the vessel and the second tank for operably connecting the vessel to the scrubber and the scrubber to the second tank and configured to receive an off-gas containing a third portion of the bromine electrolyte and a fourth portion of the hydrogen reactant, the scrubber configured to separate the third portion from the fourth portion through contacting the off-gas and the second portion of the bromine electrolyte, and a third return line operably connecting the scrubber to the $H_2$ return system to return the fourth portion of the hydrogen reactant to the first tank, wherein the third portion of the bromine electrolyte from the scrubber is returned to the second tank.

On basis of such a flow battery system the present one or more objects are achieved. The present inventors found that by replacing the hydrogen storage tanks by a coupling to a hydrogen pipeline network the investment cost per unit of energy stored are reduced. This enables a cost efficient expansion of the storage duration from the 6 to 10 hours that are typical for existing flow battery systems to the 100 to 150 hours that are required for reliable wind-solar-storage electricity systems.

The present invention thus combines electrochemical compression in pressure balanced cells with atmospheric electrolyte tanks. To increase system energy efficiency both pressure energy and thermal energy are exchanged between the out- and inflowing electrolyte streams in respectively a hydraulic energy recovery system and a heat exchanger between electrolyte flowing to and from the flow battery cell stack. By using an energy recovery system (ERS) up to 80% of the compression energy can be recovered. The ERS must be made corrosion resistant for use with the electrolyte, suitable materials include ETFE, PTFE, ETCFE, PFA, PVDF, titanium, niobium and tantalum. A heat exchanger is used to heat the electrolyte flowing into the cell stack using the electrolyte flowing out of the cell stack.

To enable the use of atmospheric electrolyte tanks in conjunction with pressurized cells a bromine scrubber removes the bromine gas from the off-gas flowing out of the atmospheric electrolyte tank. The present inventors found that the hydrogen-bromine cell produces an ideally suited scrubber fluid. During operation, mostly during charging, part of the electrolyte liquid diffuses through the membrane to the hydrogen side, which must be pumped back to the electrolyte tank. This so-called 'cross-over liquid' consists of hydrogen bromide dissolved in water in a concentration of about 2 mole per liter. The present inventors found that bromine dissolves extremely well in such a cross-over liquid. According to the present invention the electrolyte tank off-gas flows through a scrubber filled with the cross-over liquid. The bromine fraction of the off-gas dissolves in the cross-over liquid inside this scrubber. The resulting hydrogen bromide-bromine solution is subsequently routed back into the electrolyte tank. The purified hydrogen is transferred into the hydrogen pipeline, buffer tank or vented to the atmosphere.

To achieve the required gas purity for feeding hydrogen from hydrogen-X flow battery system to a hydrogen pipeline network a chemical reactor for the catalytic reaction between bromine (or other vapors) and hydrogen may be used. To achieve the required dew point for feeding hydrogen from a hydrogen-X flow battery system to a hydrogen pipeline network, the hydrogen gas is preferably be cooled in a chiller to a low temperature, such as a temperature below -8°C, for example -40°C or -20 °C. The condensate is separated in a liquid collector and is added to the cross-over liquid flow. In an example of a final hydrogen purification step, the hydrogen containing gas is sent through a liquid absorber, a two vessel desiccant dryer, a carbon filter, a pressure swing adsorption system. Regeneration steps may be included in the hydrogen purification step. All elements of the gas purification system are preferably made sufficiently corrosion resistant, suitable materials include ETFE, PTFE, ETCFE, PFA, PVDF, titanium, niobium and tantalum. Optionally the purified hydrogen gas can be further compressed in a hydrogen compressor before it is released into the hydrogen pipeline system through a pressure regulator or pressure switch.

In an example of the present flow battery system the bromine electrolyte feed and return system further comprises:

a heat exchanger configured to receive a bromine electrolyte feed from the second tank and to receive a bromine electrolyte return from the at least one cell, wherein the temperature of the bromine electrolyte feed from the second tank is increased via heat exchange with the bromine electrolyte return from the at least one cell.

In an example of the present flow battery system the bromine electrolyte feed and return system further comprises:

a hydraulic energy recovery system provided between the heat exchanger and the at least one cell, the hydraulic energy recovery system configured to receive the bromine electrolyte feed coming from the heat exchanger and to receive the bromine electrolyte return from the at least one cell for pressurizing the bromine of electrolyte feed coming from the heat exchanger to the pressure prevailing in the cell.

In an example of the present flow battery system the hydraulic energy recovery system is a pressure-exchange (PX) type rotary-driven energy recovery system.

In an example of the present flow battery system the crossover return system further comprises a compressor in the third return line, the compressor positioned between the scrubber and the $H_2$ return system, the compressor configured for pressurizing the fourth portion of the hydrogen reactant coming from the scrubber to the pressure prevailing in the $H_2$ return system.

In an example of the present flow battery system the $H_2$ feed return system further comprises a separator configured to separate a condensate from the hydrogen return stream, the condensate is to be combined with the second portion of the bromine electrolyte coming from the vessel of the crossover return system.

The hydrogen ($H_2$) must be compressed to a range of 20-70 Bar to allow connection to a $H_2$ pipeline. But not by an external $H_2$ compressor because these may lower the efficiency and increase the cost. The extra energy losses and the extra investment cost that come with the use of a mechanical $H_2$ compressor may reduce the economic usefulness of the $H_2$-X flow battery with a mechanical compressor.

Therefor it is preferred to electrochemically compress $H_2$ inside the $H_2$-X flow battery cells. But not in a cell with a high differential pressure, e.g. 70 Bar on the $H_2$ side and 1.1 Bar on the liquid electrolyte side. With increased differential pressure, more $H_2$ permeates through the membrane to the liquid electrolyte which reduces the coulombic efficiency. The $H_2$ flow through the membrane can ceteris paribus only be limited by making the membrane thicker, but this increases the cell resistance which also reduces efficiency. The area specific cell resistance is expressed in $\Omega.cm^2$, the proton conductive membrane is the largest single contributor to the total cell resistance. The resistance of a $H_2$-bromine ($Br_2$) cell containing a membrane of 50 $\mu m$ thickness (Perfluorosulfonic acid type, Chemours NR212) was measured using impedance spectroscopy. The total cell resistance was 0.096 $\Omega.cm^2$, the contribution of the membrane was 0.050 $\Omega.cm^2$. In a second experiment the resistance of a $H_2$-$Br_2$ cell containing a 50% thinner membrane of 25$\mu m$ thickness (Chemours NR211) was measured. The total cell resistance was 0.071 $\Omega.cm^2$, the contribution of the membrane was 0.025 $\Omega.cm^2$. Thus, it is shown that the resistance of the membrane increases linearly with its thickness and that it is beneficial for reducing cell resistance to reduce the thickness of the membrane. However, $H_2$ permeation through the membrane also increases linearly as the membrane thickness is reduced for a given pressure difference across the membrane. The amount of gas permeation through a membrane can be expressed in the unit 'Barrer', 1 Barrer is $3.35 \times 10^{-16} \frac{mol \cdot m}{m^2 \cdot s \cdot Pa}$. The permeability of six different Perfluorosulfonic acid type membranes was measured at 20°C, 40°C and 60°C. At 20°C the average permeability was 9 Barrer, at 40°C it was 25 Barrer and at 60°C it was 40 Barrer. The $H_2$ permeation through a 50$\mu$m thick membrane with 40 Barrer permeability and 68.9 Bar pressure difference is 1.85 mmole/m$^2$.s. Re-compressing $H_2$ from 1.1 to 70 Bar with an 80% efficient adiabatic compressor requires 3.13 kWh/kg of compression energy. So, recompressing 1.85 mmole/m$^2$.s translates to a power loss of 41.6 W/m$^2$ of cell area. Reducing the membrane thickness from 50$\mu$m to 25$\mu$m thickness reduces the area specific resistance by 0.025 $\Omega$.cm$^2$. A typical current density for a $H_2$-$Br_2$ cell is 0.3 A/cm$^2$. At this current density, halving the membrane thickness leads to a power gain of 22.5 W/m$^2$. However, this gain is nullified by the extra power loss from $H_2$ diffusion and recompression of -41.6 W/cm$^2$. Using the input variables described above, the optimum membrane thickness is about 50 $\mu$m if the trade-off is considered between reducing cell resistance (through the use of thinner membranes) and reducing $H_2$ permeation (through the use of thicker membranes).

So, the electrochemical compression is preferably done in a 'pressure balanced' cell with thin membranes (e.g. 25 $\mu$m or 10 $\mu$m), whereby the electrolyte liquid in the cell is pressurized. This way the $H_2$ permeation is reduced compared to a cell where the liquid electrolyte has (near) ambient pressure and the $H_2$ is pressurized to e.g. 70 Bar. A simple way to achieve pressure balancing in the cells is to store the liquid electrolyte in a tank at an increased pressure, equal to the $H_2$ pressure. The downside of this solution is that it will increase the cost of the electrolyte liquid storage tank. As an example, a glass-lined steel tank with a volume of 19 m$^3$ and a maximum pressure of 17.5 Bar at 60°C was used in a $H_2$-$Br_2$ system with a nominal energy capacity of 900 kWh. The purchase price for the glass-lined steel tank was €72,000 (€$_{2021}$), the equivalent of €80/kWh. This is about ten times more expensive than an atmospheric storage tank of the same volume.

Therefor the bulk of the electrolyte liquid is preferably stored in an atmospheric tank, and the $H_2$-X flow battery system is designed in such a way that the electrolyte liquid is pressurized just before it flows into the pressure balanced cell stack. But not without an 'energy recovery system' after the cell stack that recovers most of the hydraulic energy of the electrolyte fluid. Hydraulic energy recovery systems are known in the field of saltwater reverse osmosis plants. High pressure pumps used in saltwater reverse osmosis plants typically require between 55 and 70 bar pressure to increase feedwater pressure above the osmotic pressure of seawater. Energy recovery systems are commonly used to recover the hydraulic energy from the return stream and transfer it to the feed stream, reducing both the amount of energy otherwise required by the high-pressure pumps and the size of these high-pressure pumps. The preferred solution is a rotary-driven energy recovery system which comprises a central rotor, where the low-pressure feed and high pressure return stream are introduced. The rotor is filled with low pressure feed, sealed, then high pressure return stream is introduced, pressurizing the low-pressure feed, pushing it out toward the high-pressure flow loop. After the rotor is re-sealed, the resulting low pressure return stream is displaced by incoming low-pressure feed stream and the process repeats. 'PX' (Pressure Exchange) is the most widely used rotary energy recovery system in modern saltwater reverse osmosis plants, due to its compact size, durability, modular design, and efficiency. A PX type of rotary-driven energy recovery system can also be used in the electrolyte liquid flow loop of a $H_2$-X flow battery system, because of similarities between the working conditions of a saltwater reverse osmosis plant and a $H_2$-X flow battery system. Coincidentally the pressure level of $H_2$ pipelines is similar to the osmotic pressure of seawater, and in both systems a small amount of mixing between the feed and return streams in the energy recovery system is acceptable. The advantage of the energy recovery system is explained by means of a 1 MW discharge power $H_2$-$Br_2$ system. The cells operate in discharge mode at 0.8V with a current density of 0.3 A/cm$^2$ in both charge and discharge mode. The electrolyte liquid has a minimum $Br_2$ concentration of 0.44 mole/l at the cell inlet and it is supplied to the cell at a stoichiometric ratio of at least 2 and at a pressure of 70 Bar. The cell stack needs to be supplied with 6.5 moles of $Br_2$ per second to sustain the electrochemical reaction, with the aforementioned concentration and stoichiometric ratio this translates to an electrolyte liquid flow rate of 30 litre per second. This flowrate is assumed to be constant in charging and discharging. Compressing this amount of liquid to 70 Bar requires a power of at least 207 kW, assuming a 92% efficient high-pressure pump this increases to 225 kW of parasitic power loss. If the pressure drop of the cells is 2 Bar, and the efficiency of the energy recovery system is 92%, 185 kW of power is recovered. Although this is still a net power requirement of 40 kW, it is more efficient than mechanical compression. The cells produce 6.5 moles/s or 47 kg/h of $H_2$ during charging, multiplied by 3.13 kWh/kg compressor energy need (1.1 to 70 Bar, 80% efficient adiabatic compression) this means 146 kW of parasitic power loss in case a mechanical compressor had been used.

In discharge gas and electrolyte liquid pressures can be chosen differently for improved efficiency. A pressure difference over the membrane can be chosen such that the advantage of increased cell voltage caused by Nernstian potential outweighs the disadvantage of $H_2$ permeation and recompression. For a 25$\mu$m thick membrane a pressure difference of around 35 Bar is optimal with boundary conditions 3.13 kWh/kg $H_2$ recompression energy, 40 Barrer membrane permeability and 0.3 A/cm$^2$ current density.

Even in a pressure balanced cell some $H_2$ will enter the electrolyte liquid because of solubility. The solubility of a gas in a liquid increase with the pressure of the gas above the liquid. The electrolyte liquid will

therefore release $H_2$ into the atmospheric tank after decompression in the energy recovery system. At 70 Bar and 330 K up to 0.05 mole $H_2$ can dissolve in each kilogram of electrolyte liquid, at atmospheric pressure this solubility is reduced to less than 0.001 mole $H_2$ per kilogram. This $H_2$ off-gas must be purified from $Br_2$ in the $H_2$ scrubber filled with cross-over liquid. A 10x700cm$^2$-cell $H_2$-$Br_2$ flow battery stack cell was tested with a current density of 0.3 A/cm$^2$ in charging and 0.26 A/cm$^2$ in discharging. Both the hydrogen bromide (HBr) concentration in the cross-over liquid and the amount of cross-over liquid were measured. The HBr concentration in the cross-over liquid was 2.65 mole/l, the density of the cross-over liquid is 1.15 g/ml. Over a period of 5 hours a total amount of 790 ml of cross-over liquid was collected. This translates to a net flux of 26 mg/cm$^2$h. Others have reported higher amounts of cross-over liquid in $H_2$-$Br_2$ flow battery cells. In table 1 of US 2017/0244127 the amount of cross-over water is given for several membranes, most membranes have a water flux of 450 mg/cm$^2$.h at a current density of 500 mA/cm$^2$ and an electrolyte liquid composition of 0.9 mole/l $Br_2$ and 1.0 mole/l HBr. The difference can be explained from the different experimental setups. In an experiment carried out by the present inventors the net flux of cross-over liquid was measured over several full charge-discharge cycles. In discharge the electro-osmotic flux reverses, and a large part of the cross-over liquid returns to the electrolyte liquid. In US 2017/0244127 on the other hand the cross-over liquid flux was only measured during the charging step, and all cross-over liquid was condensed in a cold trap. The electrolyte liquid flow rate was 9.3 l/min, with a density of 1.2 g/ml this translates to a flow of 670 kg/h. During a pressure cycle from atmospheric to 70 Bar, a total amount of 33.5 mole of $H_2$ could dissolve in this amount of electrolyte liquid. This would yield an off-gas flow of about 800 litres per hour of $H_2$ from the electrolyte tank. This gas flow will contain $Br_2$. The amount of $Br_2$ will vary with the vapor pressure of $Br_2$ which in turn varies with the concentration of $Br_2$ and the temperature inside the tank. If the average vapor pressure of $Br_2$ in the electrolyte tank is about 1,000 Pa, the off-gas will contain 1% of $Br_2$ (by volume). In this calculation example this means that 0.335 mole of $Br_2$ per hour should be filtered in the scrubber that is filled with 158 ml/h of 2.65 M of HBr. On basis of the method described in in J.K. Wlodarczyk et al., Journal of Power Sources 508 (2021) 2302027 one can calculate that at least 4 mole/l of $Br_2$ can be dissolved in 2.65 mole/l of HBr. This means that with 158 ml/h up to 0.63 mole $Br_2$ can be dissolved. This is more than the 0.335 mole of $Br_2$ that should be dissolved, which shows that the invention works.

The amount of cross-over liquid that can be collected from the cells is affected by many factors, such as: current density, liquid electrolyte composition, cell temperature, $H_2$ flowrate in the cell, membrane type and thickness and the duration of the charge and discharge cycles. The flux of off-gas from the atmospheric electrolyte liquid tank is affected by pressure difference over the membrane, pressure difference between the cell and the electrolyte liquid tank, the electrolyte liquid composition and flowrate and the permeability of the membrane (which increases with temperature for most membranes). In practical systems built according to the invention, the proper balance must be maintained between the amount of cross-over liquid flowing into the scrubber and the amount of $Br_2$ that is to be filtered out from the off-gas in the gas-washer.

In all cases the solution is to use the crossover HBr-liquid that collects on the $H_2$ compartment to capture mainly the escaping $Br_2$-gas, but also the HBr- and $H_2O$-gas, from the off-gas escaping from the electrolyte liquid tank. This HBr containing cross-over liquid evolves as a result of osmotic drag and diffusion of water through the membrane in the cells, and the inability of the membrane to be fully impermeable to the diffusion of $Br_3^-$ and $Br^-$. The $Br_3^-$ (or $Br_2$) gets reduced to $Br^-$ at the $H_2$-electrode, which means that the crossover liquid is composed of $H_2O$ and HBr. The invention here is to lead the electrolyte liquid tank off-gas, consisting mainly of $H_2$-gas but also carrying the $Br_2$, $H_2O$ and HBr-gases, through this crossover HBr-solution inside a scrubber. Inside this scrubber the crossover liquid functions as a "trap" for the $Br_2$, HBr and $H_2O$-gas. The trapping mechanism of $Br_2$ occurs by reaction with $Br^-$ and formation of soluble $Br_3^-$-, $Br_5^-$-complexes, while the HBr and $H_2O$-gas dissolve in the crossover liquid. This process opens new options to retrieve the purified $H_2$-gas back into the $H_2$ subsystem, and at the same time prevent any losses of $Br_2$ and $Br^-$.

The crossover HBr-liquid is continuously produced during cell operation, but mostly during the charging step. The electrolyte liquid tank off-gas constantly escapes from the atmospheric tank when the system is operated. And so, this capturing idea can continuously be operated in a steady-state trapping system.

Further objects, features and advantages of the present disclosure will be understood by reference to the following drawings and detailed description.

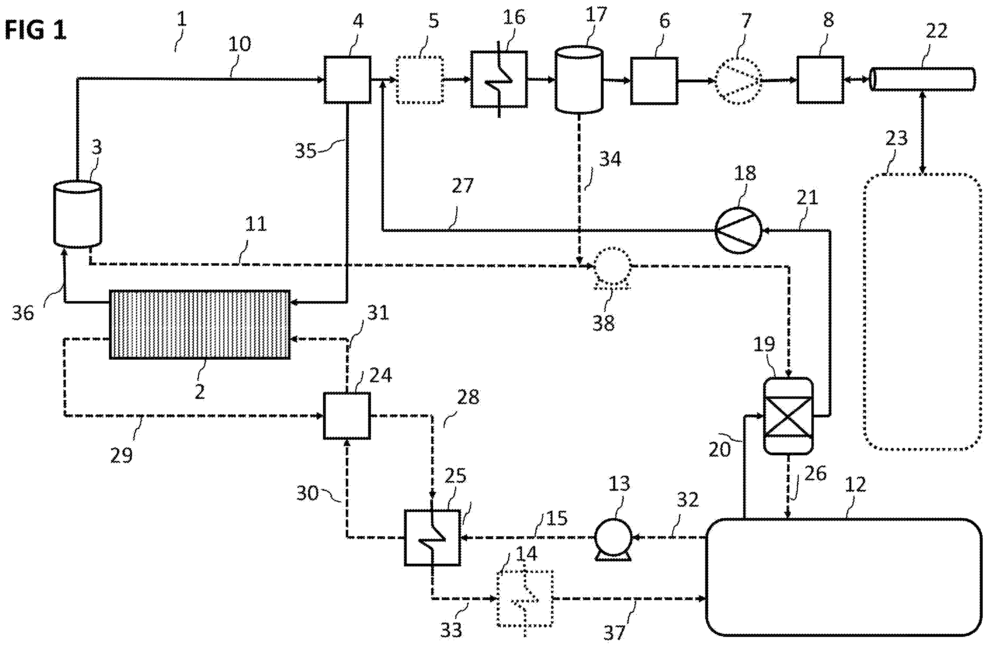

Figure 1 schematically shows a hydrogen-X flow battery system for storage of renewable electricity according to the present invention.

BRIEF DESCRIPTION OF THE DRAWINGS

Figure 1 schematically shows a hydrogen-X flow battery system for storage of renewable electricity (1), comprising pressurize balanced hydrogen-X flow battery cell stack (2), cross-over liquid collector (3), device for hydrogen recirculation (4), liquid ad- or absorber (6), a pressure regulator or pressure switch (8) and an underground hydrogen storage cavern (23). These components are connected by a hydrogen line (10) and a hydrogen line (35). Hydrogen is stored in a hydrogen pipeline network (22) which may optionally be connected via a line to an underground hydrogen storage cavern (23), or any other large scale hydrogen storage. The direction of the arrows in Figure 1, especially the ones between units 4, 5, 16, 17, 6, 8 refer to the situation of "charging". In a situation of "discharging" the direction of these arrows will be in the other direction, i.e. opposite to the direction shown in Figure 1.

Chemical reactor for the catalytic reaction between bromine or other vapor and hydrogen (5) and hydrogen compressor (7) are optional units. Examples of device for hydrogen recirculation (4) are an ejector, a mechanical or electrochemical compressor or a blower. From device for hydrogen recirculation (4) a flow of hydrogen is sent to hydrogen-X flow battery cell stack (2) via line (35). The hydrogen containing flow from hydrogen-X flow battery cell stack (2) is sent to crossover liquid collector (3) and is returned via line (36) back to device for hydrogen recirculation (4).

The liquid collected in cross-over liquid collector (3) is sent through a cross-over liquid return line (11) back to the electrolyte tank (12). The flow of cross-over liquid to hydrogen scrubber (19) can be driven by gravity, hydrogen pressure or optionally by a cross-over liquid return pump (38). Hydrogen scrubber (19) is filled through the cross-over liquid return line (11) with cross-over liquid collected originating from the cross-over liquid collector (3) and liquid (34) originating from liquid separator (17). Hydrogen scrubber (19) is fed by electrolyte tank off-gas (20), i.e. a gas mixture of hydrogen and bromine.

A chiller (16) is used to achieve the desired dew point of the hydrogen gas. The condensate (34) originating from chiller (16) is collected in liquid separator (17) and combined with liquid originating from cross-over liquid collector (3). A mechanical or electrochemical hydrogen compressor (18) is used for pressurizing the hydrogen fraction of the hydrogen off-gas return line (21) originating from hydrogen scrubber (19). Surplus cross-over liquid with traces bromine (26) from hydrogen scrubber (19) is returned to electrolyte tank (12). Electrolyte tank off-gas (20) is fed to hydrogen scrubber (19). Hydrogen originating from hydrogen off-gas return line (21) is thus returned, via hydrogen compressor (18), as hydrogen stream (27) to the hydrogen loop.

The electrolyte pump (13) pumps electrolyte (32) originating from electrolyte tank (12) as electrolyte (15) to heat exchanger (25). The temperature of electrolyte (15) is increased and electrolyte (30) thus heated is sent to a hydraulic energy recovery system (24). In the hydraulic energy recovery system (24) the pressure of electrolyte (31) is brought to the pressure prevailing in cell stack (2). The pressure of electrolyte (29) flowing out of cell stack (2) is used to increase the pressure of electrolyte (30) in hydraulic energy recovery system (24). The process heat of electrolyte (28) is used to increase the temperature of electrolyte (15) via heat exchanger (25). Additionally, process heat of electrolyte (33) may be further removed by electrolyte heat exchanger (14). Eventually, electrolyte (37) is returned to electrolyte tank (12). The electrolyte flow loop (15) contains a hydraulic energy recovery system (24) and heat exchanger (25) between electrolyte (32, 15, 30, 31) flowing to and electrolyte (29, 28, 33, 37) flowing from flow battery cell stack (25).

The bulk of the electrolyte liquid is preferably stored in an atmospheric tank (12), and the present $H_2$-X flow battery system (1) is designed in such a way that the electrolyte liquid is pressurized just before it flows into the pressure balanced cell stack (2). It is preferred to have an energy recovery system (24) after cell stack (2) for recovering most of the hydraulic energy of the electrolyte fluid.

The advantage of the energy recovery system is explained by means of a 1 MW discharge power $H_2$-$Br_2$ system. The cells operate in discharge mode at 0.8V with a current density of 0.3 A/cm$^2$ in both charge and discharge mode. The electrolyte liquid has a minimum $Br_2$ concentration of 0.44 mole/l at the cell inlet and it is supplied to the cell at a stoichiometric ratio of at least 2 and at a pressure of 70 Bar. The cell stack needs to be supplied with 6.5 moles of $Br_2$ per second to sustain the electrochemical reaction, with the aforementioned concentration and stoichiometric ratio this translates to an electrolyte liquid flow rate of 30 liter per second. This flowrate is assumed to be constant in charging and discharging. Compressing this amount of liquid to 70 Bar requires a power of at least 207 kW. Assuming a 92% efficient high pressure pump, this increases to 225 kW. Calculation: 0.03 m$^3$/s x 6 900 000 Pa : 0.92 = = 225 Nm/s = 225 kW.

If the pressure drop of the cells is 2 Bar, and the efficiency of the energy recovery system is 92%, 185 kW of power is recovered. Calculation: 0.03 m3/s x 6 700 000 Pa x 0.92 = 184 920 Nm/s = 185 kW.

Although this is still a net power requirement of 40 kW, it is more efficient than mechanical compression. The cells produce 6.5 moles/s or 47 kg/h of $H_2$ during charging, multiplied by 3.13 kWh/kg compressor energy need (1.1 to 70 Bar, 80% efficient adiabatic compression) this means 146 kW of parasitic power loss in case a mechanical compressor had been used.

**Claims**

1. A flow battery system, comprising:

   a first tank (4) including a hydrogen reactant;
   a second tank (12) including a bromine electrolyte;
   at least one cell (2) including a hydrogen reactant side operably connected to the first tank (4) through an $H_2$ feed and return system (35, 36, 10) and a bromine electrolyte side operably connected to the second tank (12) through a bromine electrolyte feed and return system; and
   a crossover return system including (i) a vessel (3) operably connected to the $H_2$ feed and return system (35, 36, 10) and configured to receive an effluent (36) containing a first portion of the hydrogen reactant and a second portion of the bromine electrolyte, the vessel (3) configured to separate the first portion from the second portion, (ii) a first return line (10) operably connecting the vessel (3) to the first tank (4) to return first portion of the hydrogen reactant to the first tank (4), and (iii) a second return line (11) operably connecting the vessel (3) to the second tank (12) to return the second portion of the bromine electrolyte to the second tank (12), the flow battery system further comprising: a scrubber (19) positioned between the vessel (3) and the second tank (12) for operably connecting the vessel (3) to the scrubber(19) and the scrubber(19) to the second tank (12) and configured to receive an off-gas (20) containing a third portion of the bromine electrolyte and a fourth portion of the hydrogen reactant from the second tank (12), the scrubber (19) configured to separate the third portion from the fourth portion through contacting the off-gas (20) and the second portion of the bromine electrolyte, and a third return line (21) operably connecting the scrubber (19) to the H$_2$ return system to return the fourth portion of the hydrogen reactant to the first tank (4), wherein the third portion of the bromine electrolyte from the scrubber (19) is returned to the second tank (12).

2. The flow battery system of claim 1, the bromine electrolyte feed and return system further comprising:
   a heat exchanger (25) configured to receive a bromine electrolyte feed (15) from the second tank (12) and to receive a bromine electrolyte return (28) from the at least one cell (2), wherein the temperature of the bromine electrolyte feed (15) from the second tank (12) is increased via heat exchange with the bromine electrolyte return (28) from the at least one cell (2).

3. The flow battery system of any one of claims 1-2, the bromine electrolyte feed and return system further comprising:
   a hydraulic energy recovery system provided between the heat exchanger (25) and the at least one cell (2), the hydraulic energy recovery system (24) configured to receive the bromine electrolyte feed (30) coming from the heat exchanger (25) and to receive the bromine electrolyte return (29) from the at least one cell (2) for pressurizing the bromine of electrolyte feed (30) coming from the heat exchanger (25) to the pressure prevailing in the cell (2).

4. The flow battery system of claim 3, wherein the hydraulic energy recovery system is a pressure-exchange (PX) type rotary-driven energy recovery system.

tem.

5. The flow battery system according to any one of claims 1-4, further comprising a compressor (18) in the third return line, the compressor (18) positioned between the scrubber (19) and the H$_2$ return system, the compressor configured for pressurizing the fourth portion of the hydrogen reactant coming from the scrubber (19) to the pressure prevailing in the H$_2$ return system.

6. The flow battery system according to any one of claims 1-5, the H$_2$ feed return system further comprising a separator (17) configured to separate a condensate (34) from the hydrogen return stream, the condensate (34) is to be combined with the second portion of the bromine electrolyte coming from the vessel (3) of the crossover return system.

**Patentansprüche**

1. Flussbatteriesystem, Folgendes umfassend:

   einen ersten Tank (4), der einen Wasserstoff-Reaktanten enthält;
   einen zweiten Tank (12), der einen Brom-Elektrolyten enthält;
   mindestens eine Zelle (2), umfassend eine Wasserstoff-Reaktantenseite, die durch ein H$_2$-Zuführ- und Rückführsystem (35, 36, 10) betriebsfähig mit dem ersten Tank (4) verbunden ist, und eine Bromelektrolytseite, die durch ein Bromelektrolytzuführ- und Rückführsystem betriebsfähig mit dem zweiten Tank (12) verbunden ist; und
   ein Crossover-Rückführsystem, umfassend (i) einen Behälter (3), der betriebsfähig mit dem H$_2$-Zuführ- und Rückführsystem (35, 36, 10) verbunden ist und eingerichtet ist, um einen Ausfluss (36) aufzunehmen, der einen ersten Teil des Wasserstoff-Reaktanten und einen zweiten Teil des Brom-Elektrolyten enthält, wobei der Behälter (3) eingerichtet ist, um den ersten Teil von dem zweiten Teil zu trennen, (ii) eine erste Rückführleitung (10), die den Behälter (3) betriebsfähig mit dem ersten Tank (4) verbindet, um den ersten Teil des Wasserstoff-Reaktanten in den ersten Tank (4) zurückzuführen, und (iii) eine zweite Rückführleitung (11), die den Behälter (3) betriebsfähig mit dem zweiten Tank (12) verbindet, um den zweiten Teil des Brom-Elektrolyten in den zweiten Tank (12) zurückzuführen, das Flussbatteriesystem weiterhin Folgendes umfassend:
   einen Wäscher (19), der zwischen dem Behälter (3) und dem zweiten Tank (12) angeordnet ist, um den Behälter (3) betriebsfähig mit dem Wäscher (19) und den Wäscher (19) mit dem zweiten Tank (12) zu verbinden, und eingerichtet ist, um ein Abgas (20) aufzunehmen, das einen dritten Teil des Brom-Elektrolyten und einen vierten Teil des Wasserstoff-Reaktanten aus dem zweiten Tank (12) enthält, wobei der Wäscher (19) eingerichtet ist, um den dritten Teil von dem vierten Teil durch Kontaktieren des Abgases (20) und des zweiten Teils des Brom-Elektrolyten zu trennen, und eine dritte Rückführleitung (21), die den Wäscher (19) betriebsfähig mit dem H$_2$-Rückführsystem verbindet, um den vierten Teil des Wasserstoff-Reaktanten in den ersten Tank (4) zurückzuführen, wobei der dritte Teil des Brom-Elektrolyten aus dem Wäscher (19) in den zweiten Tank (12) zurückgeführt wird.

2. Flussbatteriesystem nach Anspruch 1, wobei das Brom-Elektrolytzuführ- und Rückführsystem weiterhin Folgendes umfasst:
einen Wärmetauscher (25), der eingerichtet ist, um eine Brom-Elektrolytzuführung (15) aus dem zweiten Tank (12) aufzunehmen und eine Brom-Elektrolytrückführung (28) aus der mindestens einen Zelle (2) aufzunehmen, wobei die Temperatur der Brom-Elektrolytzuführung (15) aus dem zweiten Tank (12) durch Wärmeaustausch mit der Brom-Elektrolytrückführung (28) aus der mindestens einen Zelle (2) erhöht wird.

3. Flussbatteriesystem nach einem der Ansprüche 1 bis 2, wobei das Brom-Elektrolytzuführ- und Rückführsystem weiterhin Folgendes umfasst:
ein hydraulisches Energierückgewinnungssystem, das zwischen dem Wärmetauscher (25) und der mindestens einen Zelle (2) bereitgestellt ist, wobei das hydraulische Energierückgewinnungssystem (24) eingerichtet ist, um die Brom-Elektrolytzuführung (30) aufzunehmen, die aus dem Wärmetauscher (25) kommt, und die Brom-Elektrolytrückführung (29) aus der mindestens einen Zelle (2) aufzunehmen, um die Brom-Elektrolytzuführung (30), die aus dem Wärmetauscher (25) kommt, auf den Druck zu bringen, der in der Zelle (2) herrscht.

4. Flussbatteriesystem nach Anspruch 3, wobei das hydraulische Energierückgewinnungssystem ein drehgetriebenes Energierückgewinnungssystem vom Druckaustauschtyp (PX-Typ) ist.

5. Flussbatteriesystem nach einem der Ansprüche 1 bis 4, weiterhin einen Kompressor (18) in der dritten Rückführleitung umfassend, wobei der Kompressor (18) zwischen dem Wäscher (19) und dem H$_2$-Rückführsystem angeordnet ist, wobei der Kompressor eingerichtet ist, um den vierten Teil des Wasserstoff-Reaktanten, der aus dem Wäscher (19) kommt, auf den Druck zu bringen, der in dem H$_2$-Rückführsystem herrscht.

6. Flussbatteriesystem nach einem der Ansprüche 1 bis 5, wobei das H$_2$-Zuführ-Rückführsystem weiterhin einen Separator (17) umfasst, der eingerichtet ist, um ein Kondensat (34) von dem Wasserstoff-Rückführstrom zu trennen, wobei das Kondensat (34) mit dem zweiten Teil des Brom-Elektrolyten kombiniert werden soll, der aus dem Behälter (3) des Crossover-Rückführsystems kommt.

**Revendications**

1. Système de batterie à circulation, comprenant :

un premier réservoir (4) comprenant un réactif à l'hydrogène ;
un second réservoir (12) comprenant un électrolyte au brome ;
au moins une cellule (2) comprenant un côté réactif à l'hydrogène relié de manière opérationnelle au premier réservoir (4) par un système d'alimentation et de retour de H$_2$ (35, 36, 10) et un côté électrolyte au brome relié de manière opérationnelle au second réservoir (12) par un système d'alimentation et de retour d'électrolyte au brome ; et
un système de retour croisé comprenant (i) un récipient (3) relié de manière opérationnelle au système d'alimentation et de retour de H$_2$ (35, 36, 10) et configuré pour recevoir un effluent (36) contenant une première partie du réactif à l'hydrogène et une deuxième partie de l'électrolyte au brome, le récipient (3) étant configuré pour séparer la première partie de la deuxième partie, (ii) une première conduite de retour (10) reliant de manière opérationnelle le récipient (3) au premier réservoir (4) pour renvoyer la première partie du réactif à l'hydrogène vers le premier réservoir (4), et (iii) une deuxième conduite de retour (11) reliant de manière opérationnelle le récipient (3) au second réservoir (12) pour renvoyer la deuxième partie de l'électrolyte au brome vers le second réservoir (12), le système de batterie à circulation comprenant en outre :
un épurateur (19) positionné entre le récipient (3) et le second réservoir (12) pour relier de manière opérationnelle le récipient (3) à l'épurateur (19) et l'épurateur (19) au second réservoir (12) et configuré pour recevoir un gaz résiduaire (20) contenant une troisième partie de l'électrolyte au brome et une quatrième partie du réactif à l'hydrogène provenant du second réservoir (12), l'épurateur (19) étant configuré pour séparer la troisième partie de la quatrième partie en mettant en contact le gaz résiduaire (20) et la deuxième partie de l'électrolyte au brome, et une troisième conduite de retour (21) reliant de manière opérationnelle l'épurateur (19) au système de retour de H$_2$ pour renvoyer la quatrième partie du réactif à l'hydrogène vers le premier réservoir (4), dans lequel la troisième partie de l'électrolyte au brome provenant de l'épurateur (19) est renvoyée vers le second réservoir (12).

2. Système de batterie à circulation de la revendication 1, le système d'alimentation et de retour d'électrolyte au brome comprenant en outre :
un échangeur de chaleur (25) configuré pour recevoir une alimentation d'électrolyte au brome (15) provenant du second réservoir (12) et pour recevoir un retour d'électrolyte au brome (28) provenant de l'au moins une cellule (2), dans lequel la température de l'alimentation d'électrolyte au brome (15) provenant du second réservoir (12) est augmentée par échange thermique avec le retour d'électrolyte au brome (28) provenant de l'au moins une cellule (2).

3. Système de batterie à circulation selon l'une quelconque des revendications 1 et 2, le système d'alimentation et de retour d'électrolyte au brome comprenant en outre :
un système de récupération d'énergie hydraulique prévu entre l'échangeur de chaleur (25) et l'au moins une cellule (2), le système de récupération d'énergie hydraulique (24) étant configuré pour recevoir l'alimentation d'électrolyte au brome (30) provenant de l'échangeur de chaleur (25) et pour recevoir le retour d'électrolyte au brome (29) de l'au moins une cellule (2) afin de pressuriser le brome de l'alimentation d'électrolyte (30) provenant de l'échangeur de chaleur (25) à la pression régnant dans la cellule (2).

4. Système de batterie à circulation selon la revendication 3, dans lequel le système de récupération d'énergie hydraulique est un système de récupération d'énergie à entraînement rotatif du type à échange de pression (PX).

5. Système de batterie à circulation selon l'une quelconque des revendications 1 à 4, comprenant en outre un compresseur (18) dans la troisième conduite de retour, le compresseur (18) étant positionné entre l'épurateur (19) et le système de retour de H$_2$, le compresseur étant configuré pour pressuriser la quatrième partie du réactif à l'hydrogène provenant de l'épurateur (19) à la pression régnant dans le système de retour de H$_2$.

6. Système de batterie à circulation selon l'une quelconque des revendications 1 à 5, le système d'alimentation et de retour de H$_2$ comprenant en outre un séparateur (17) configuré pour séparer un condensat (34) du flux de retour d'hydrogène, le condensat (34) doit être combiné avec la deuxième partie de l'électrolyte au brome provenant du récipient (3) du système de retour croisé.

FIG 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3087634 A
- US 20160322653 A
- WO 2013086100 A
- US 2012299384 A
- US 2015188178 A
- US 2013309592 A
- US 10299384 B
- US 20170244127 A

**Non-patent literature cited in the description**

- **J.K. WLODARCZYK et al.** *Journal of Power Sources*, 2021, vol. 508, 2302027